# EUROPÄISCHE PATENTSCHRIFT

(11) **EP 0 829 400 B1**
(45) Veröffentlichungstag und Bekanntmachung des Hinweises auf die Patenterteilung: **03.11.1999**
(21) Anmeldenummer: 97113628.8
(22) Anmeldetag: 07.08.1997
(51) Int. Cl.: B60S 3/00, B60S 3/06

(54) **Portalwasch- und Trocknungsvorrichtung für Fahrzeuge**
Portal wash and drying apparatus for vehicles
Portique de lavage et de séchage pour véhicules

(30) Priorität: 11.09.1996 DE 19636937
(43) Veröffentlichungstag der Anmeldung: 18.03.1998
(73) Patentinhaber: Wesumat Fahrzeugwaschanlagen GmbH, 86165 Augsburg (DE)
(72) Erfinder: Decker, Wolfgang, 86441 Zusmarshausen-Wollbach (DE)
(74) Vertreter: Liebau, Gerhard, Dipl.-Ing.

(56) Entgegenhaltungen:
- DE-A- 3 211 482
- DE-C- 3 523 001
- FR-A- 2 653 399
- US-A- 5 040 485

## Beschreibung

Die Erfindung betrifft eine Portalwasch- und Trocknungsvorrichtung für Fahrzeuge, mit mindestens einem gegenüber dem ruhenden Fahrzeug in dessen Längsrichtung mittels eines Fahrmotors verfahrbaren Portal, an dem unter anderem zwei sich im wesentlichen über die Fahrzeughöhe erstreckende, im wesentlichen vertikale Luftzuführkanäle angeordnet sind, von denen jeder eine vertikale, zum Fahrzeug gerichtete Schlitzdüse aufweist.

Bei derartigen Portalwasch- und Trocknungsvorrichtungen sind meist zwei um vertikale Achsen rotierende Waschbürsten, eine höhenbewegliche, um eine horizontale Achse rotierende Waschbürste, ein horizontaler höhenbeweglicher Luftzuführkanal mit einer horizontalen Schlitzdüse und zwei vertikale Luftzuführkanäle mit jeweils einer verikalen Schlitzdüse vorgesehen. Die vertikalen Luftzuführkanäle sind dabei in der Regel gegenüber dem Portal stationär angeordnet, so daß Ihre zu den vertikalen Seitenflächen des Fahrzeugs gerichtete Schlitzdüsen beim Verfahren des Portals in einem Abstand vorbeigeführt werden, der je nach Fahrzeugbreite mehr oder weniger groß ist. Die aus den vertikalen Schlitzdüsen austretenden Luftströme dienen ausschließlich zum Trocknen der Seitenflächen, da sie bestenfalls den außenliegenden Bereich von Front und Heck des Fahrzeuges, nicht jedoch den mittleren Bereich von Front- und Heck erreichen. Die Trocknung von Front und Heck bleibt der in Abhängigkeit von der Fahrzeugkontur höhengesteuerten horizontalen Schlitzdüse überlassen. Hierbei entstehen jedoch speziell im Stoßstangenbereich derartige Turbulenzen, daß erhebliche Wassertropfen auf der Fahrzeugoberfläche und insbesondere den Stoßstangen verbleiben, die langsam austrocknen und zu störenden Kalkflecken führen.

Aus der DE-C-35 23 001 ist ferner eine Vorrichtung zum Trocknen der Seitenflächen eines gewaschenen Fahrzeuges in einer Fahrzeugwaschanlage bekannt, die insbesondere für eine Durchlaufwaschanlage (Waschstraße) bestimmt ist. Diese Vorrichtung weist ein stationäres Gestell auf, an dem oberhalb der Durchfahrtshöhe des gewaschenen Fahrzeuges eine quer zur Bewegungsrichtung des Fahrzeuges verlaufende Schiene vorgesehen ist. An dieser Schiene ist eine Laufkatze verfahrbar, die durch einen Stellmotorantrieb treibbar ist. Die Laufkatze trägt einen vertikalen Luftzuführkanal, der um eine horizontale Achse schwenkbar an der Laufkatze gelagert ist. Die vertikale Schlitzdüse ist von Borsten umgeben, damit die Fahrzeugoberfläche nicht die Schlitzdüse berühren kann. Kommt das Fahrzeug mit den Borsten in Berührung, dann wird der Luftzuführkanal um die horizontale Achse geschwenkt und bei einem bestimmten Schwenkwinkel ein Neigungsschalter betätigt, der seinerseits den Stellmotor steuert und dieser fährt den Laufwagen mit dem daran hängenden Luftzuführkanal so weit nach außen, daß die Borsten die Fahrzeugoberfläche nicht mehr oder nur noch leicht berühren. Hierdurch wird die vertikale Schlitzdüse in einem vorbestimmten Abstand gegenüber den Seitenflächen des Fahrzeuges gehalten. Da sie jedoch immer zu den Seitenflächen des Fahrzeuges hin gerichtet ist, d.h. ihre Ausströmrichtung senkrecht bzw. mit geringer Neigung zu der vertikalen Längsmittelebene des Fahrzeuges erfolgt, können mit dieser Trocknungsvorrichtung nur die vertikalen Seitenflächen des Fahrzeuges getrocknet werden und bezüglich der Trocknung der Front und des Hecks des Fahrzeuges entstehen die zuvor beschriebenen Probleme mit unschönen Kalkflecken.

Der Erfindung liegt deshalb die Aufgabe zugrunde, eine Portalwasch- und Trocknungsvorrichtung für Fahrzeuge der eingangs erwähnten Art zu schaffen, die eine zufriedenstellende Trocknung der Front und des Hecks eines Fahrzeuges, insbesondere im Stoßstangenbereich und darüber hinaus auch eine zufriedenstellende Trocknung der Seitenflächen des Fahrzeuges ermöglicht.

Dies wird nach der Erfindung dadurch erreicht, daß an einer horizontalen Traverse des Portals mindestens eine quer zu dessen Bewegungsrichtung verlaufende, horizontale Führungsschiene angeordnet ist, daß an dieser für jeden Luftzuführkanal eine mittels eines ersten Stellmotors verfahrbare Laufkatze vorgesehen ist, daß jeder Luftzuführkanal gegenüber der Laufkatze um eine vertikale Achse mittels eines zweiten Stellmotors schwenkbar ist und daß jedem Luftzuführkanal eine die vertikale Fahrzeugkontur abtastende Steuereinrichtung zugeordnet ist, welche auf den Fahrmotor und die Stellmotoren derart einwirkt, daß die vertikalen Schlitzdüsen während der Portalbewegung in einem vorbestimmten Abstand gegenüber der Fahrzeugoberfläche auch im Front- und Heckbereich entlang geführt werden und dabei die Luftzuführkanäle um die Vertikalachsen geschwenkt und so eingestellt werden, daß ihre Schlitzdüsen im wesentlichen senkrecht zu dem jeweils zu trocknenden Bereich der Fahrzeugoberfläche gerichtet sind.

Die Erfindung geht also von dem Gedanken aus, die Luftzuführkanäle zusammen mit ihren Schlitzdüsen um vertikale Achsen so zu schwenken, daß die Schlitzdüsen immer im wesentlichen senkrecht zu dem jeweils zu trocknenden Bereich der Fahrzeugoberfläche gerichtet werden können. Durch diese Verschwenkung der Luftzuführkanäle ist es möglich, die vertikalen Schlitzdüsen auch zum Trocknen der Front- und Heckbereiche des Fahrzeuges zu verwenden, in dem diese mit vorbestimmtem Abstand an den Front- und Heckbereichen entlang geführt werden. In dem nach dem Trocknen der Fahrzeugfront oder des Fahrzeughecks der jeweilige Luftzuführkanal um etwa 90° geschwenkt wird, kann dann mit denselben, in die richtige Position geschwenkten Schlitzdüsen die betreffende Seitenfläche des Fahrzeuges getrocknet werden. Die Schlitzdüsen können über die zweiten Stellmotore auch so eingestellt werden, daß die aus ihnen austretende Luftströmung nicht genau senkrecht auf den jeweils zu trocknenden Bereich der Fahrzeugoberfläche gerichtet ist, sondern in einem kleinen schrägen Winkel. Hierdurch kann erreicht werden, daß der Luftstrom während der Vorbeibewegung der Schlitzdüse an der Fahrzeugoberfläche die abzublasenden Wasserreste vor sich hertreibt. Die Formulierung "im wesentlichen senkrecht zu" soll also auch eine gewisse Schrägstellung der Schlitzdüsen in dem vorher beschriebenen kleinen Winkel zu dem vorgenannten Zweck einschließen. Die erfindungsgemäße Ausgestaltung ist speziell für Portalwasch- und Trocknungseinrichtungen geeignet, weil durch den Fahrmotor des Portals die Schlitzdüsen während der Trocknung des Front- und Heckbereiches in dem vorbestimmten richtigen Abstand gegenüber der Fahrzeugfront bzw. des Hecks gehalten und geführt werden können. Mit der erfindungsgemäßen Vorrichtung kann so eine einwandfreie Trocknung des Fahrzeugs an der Front, am Heck und an den Seitenflächen erreicht werden.

Aus dem deutschen Gebrauchsmuster DE-U-1 906 386 ist eine Wasch- und Trocknungsvorrichtung für Fahrzeuge bekannt, bei der eine horizontale, rechteckige, in sich geschlossene Führungsschiene oberhalb des Fahrzeugbereiches an der Decke einer Waschhalle abgehängt ist. An dieser Führungsschiene ist eine Laufkatze verfahrhar, die eine Wascheinheit und eine Trocknungseinheit trägt. Mittels dieser Laufkatze ist die Trocknungseinheit um das gesamte Fahrzeug auch entlang des Front- und Heckbereichs verfahrbar. Da diese bekannte Wasch- und Trocknungsvorrichtung jedoch weder über eine die Fahrzeugkontur abtastende Steuereinrichtung, noch über verschwenkbare Schlitzdüsen verfügt, konnte auch eine Zusammenschau dieser Druckschrift und der eingangs genannten DE-C-35 23 001 eine Portalwasch- und Trocknungsvorrichtung gemäß dem Anspruch 1 nicht nahelegen.

Vorteilhafte Ausgestaltungen der Erfindung sind in den Unteransprüchen gekennzeichnet. Die Erfindung ist in folgendem anhand von in der Zeichnung dargestellten Ausführungsbeispielen näher erläutert. Es zeigen:
- Fig. 1: eine erste Ausführungsform der Erfindung in Seitenansicht mit zwei verschiedenen Stellungen des Portals,
- Fig. 2: die zugehörige Draufsicht,
- Fig. 3: ein zweites Ausführungsbeispiel der Vorrichtung in Seitenansicht mit drei verschiedenen Stellungen des Portals,
- Fig. 4: die zugehörige Draufsicht,
- Fig. 5: ein Arbeitsschema der Vorrichtung.

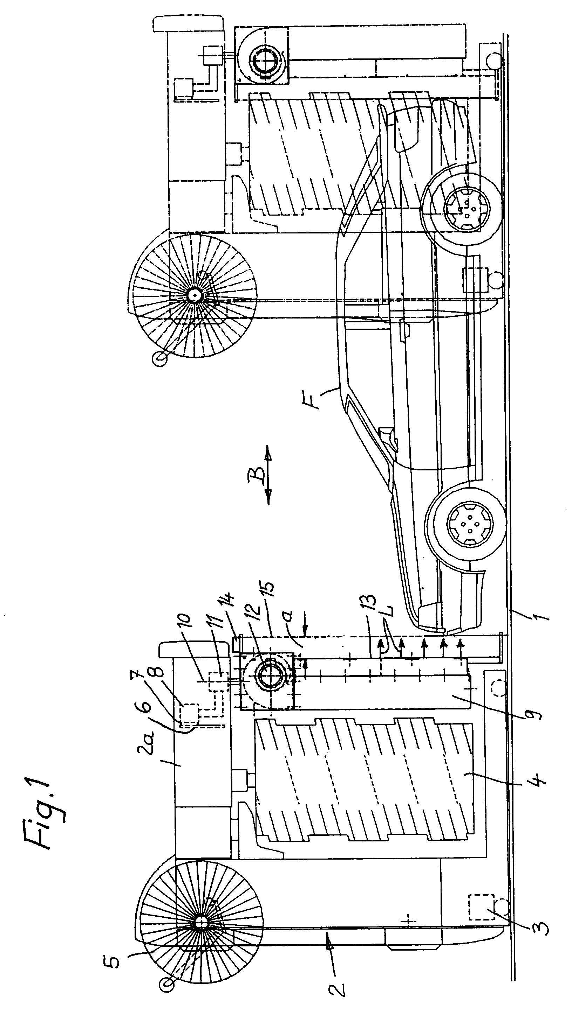

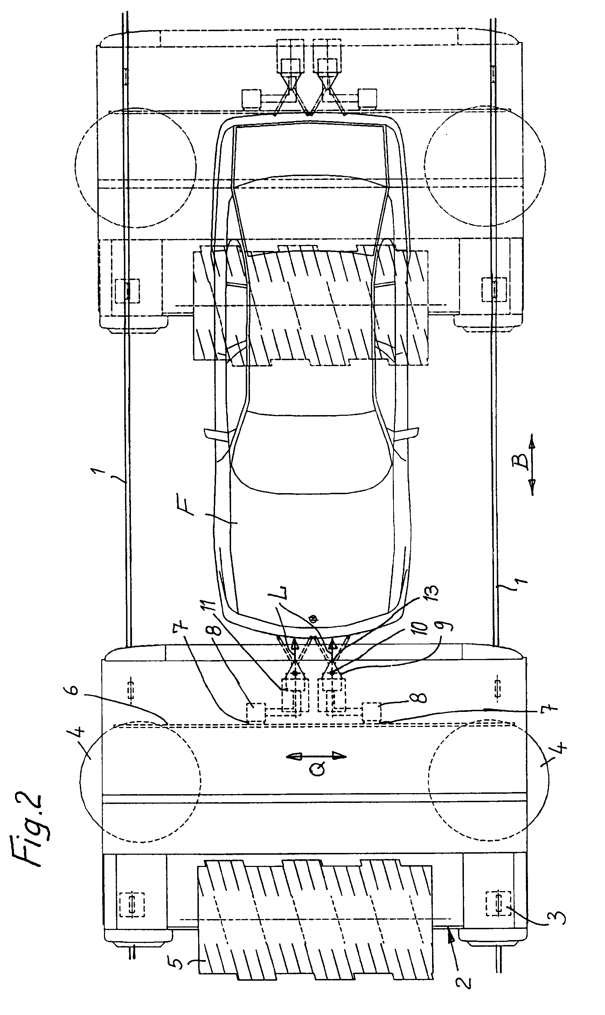

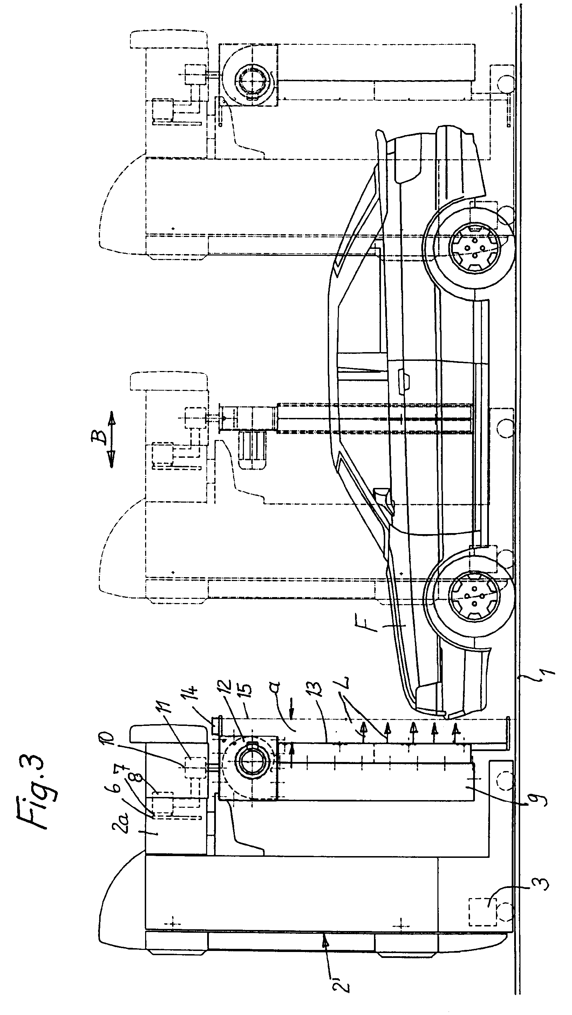

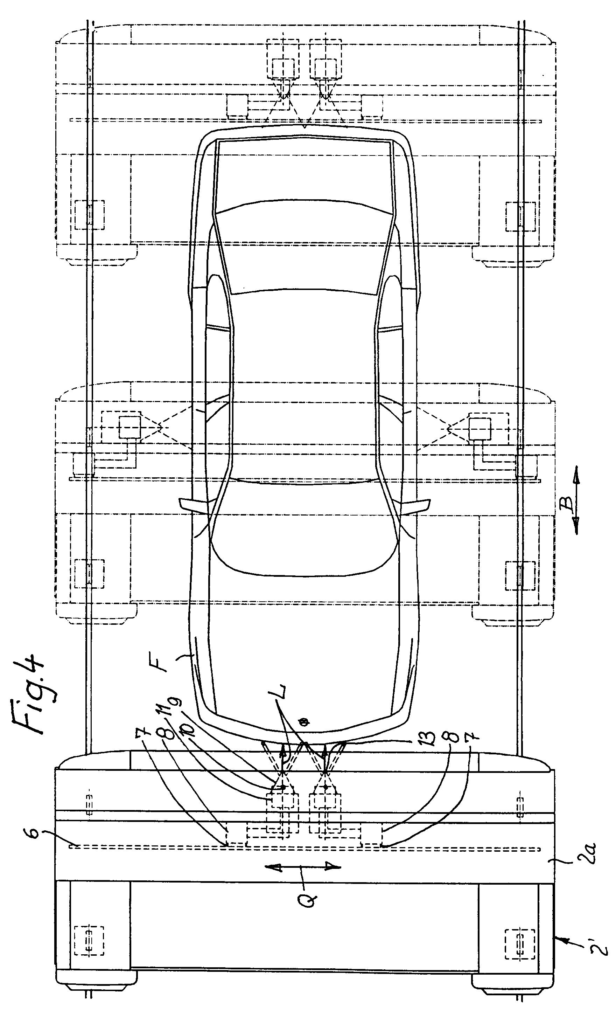

Bei Portalswasch- und Trocknungsvorrichtungen für Fahrzeuge der hier beschriebenen Art wird das Fahrzeug durch den Fahrzeuglenker in den Bereich des Portals gefahren und dann stillgesetzt. Das oder die Portale, welche die Wasch- und Trocknungsaggregate tragen, werden dann gegenüber dem ruhenden Fahrzeug mehrfach hin- und herbewegt. Es gibt Portalwasch- und Trocknungsvorrichtungen bei denen die Wasch- und Trocknungsaggregate an einem gemeinsamen Portal angeordnet sind, sogenannte Kombianlagen, wie es in den Figuren 1 und 2 dargestellt ist. Ferner sind Portalwasch- und Trocknungsvorrichtungen bekannt, bei denen die Waschaggregate an einem Portal und die Trocknungsaggregate an einem zweiten Portal angeordnet sind (Taktsystem, Duomaschinen), wie es in den Figuren 3 und 4 dargestellt ist, wobei dort allerdings nur das die Trocknungsaggregate tragende Portal dargestellt ist. Die vorliegende Erfindung eignet sich für beide Arten von Portalwasch- und Trocknungsvorrichtungen.

Bei dem in Fig. 1 und 2 dargestellten Ausführungsbeispiel ist ein auf Schienen 1 gegenüber dem ruhenden Fahrzeug F in dessen Längsrichtung verfahrbares Portal 2 vorgesehen. Dieses Portal kann mittels des Fahrmotors 3 auf den Schienen 1 in Bewegungsrichtung B hin- und hergefahren werden. An dem Portal 2 sind in üblicher Weise zwei um vertikale Achsen drehende Waschbürsten 4 und eine um eine horizontale Achse drehende Waschbürste 5 angeordnet. Ferner trägt das Portal 2 auch einen nicht dargestellten, höhenbeweglichen Luftzuführkanal mit einer horizontalen Schlitzdüse, die hauptsächlich zur Trocknung der nach oben gerichteten Bereiche der Fahrzeugoberfläche dient.

Das Portal 2 weist oberhalb des Fahrzeugbereiches eine horizontale Traverse 2a auf, die sich quer zur Bewegungsrichtung B des Portals 2 erstreckt. An dieser horizontalen Traverse 4a sind die vertikalen Waschbürsten 4 in Richtung Q quer zur Bewegungsrichtung B des Portals verschiebbar gelagert. Gegenüber bekannten Traversen ist bei dem in Fig. 1 und 2 dargestellten Ausführungsbeispiel die Traverse 2a in Bewegungsrichtung B breiter ausgeführt, so daß dort auch noch eine oder zwei horizontale Führungsschienen 6, die sich ebenfalls in Richtung Q quer zur Bewegungsrichtung B des Portals 2 erstrecken, angeordnet werden können. An der oder den Führungsschienen 6 sind zwei Laufkatzen 7 in Richtung Q verfahrbar, von denen jede über einen ersten Stellmotor 8 antreibbar ist. An jeder der Laufkatzen 7 ist ein Luftzuführkanal 9 um eine vertikale Achse 10 schwenkbar gelagert. Zur Herbeiführung einer Schwenkbewegung um diese Achse 10 ist an jeder Laufkatze 7 ein zweiter Stellmotor 11 angeordnet.

Jeder der beiden Luftzuführkanäle 9 trägt an seinem oberen Ende ein Gebläse 12 und an einer Seite eine vertikale Schlitzdüse 13. Die von dem Gebläse 12 in den Luftzuführkanal 9 geförderte Luft tritt durch die Schlitzdüse 13 im wesentlichen in Richtung der Pfeile L aus, weshalb unter "Richtung der Düse" auch die Richtung L dieses Luftstromes verstanden wird.

Jedem Luftzuführkanal 9 ist außerdem eine die vertikale Fahrzeugkontur abtastende Steuereinrichtung 14 zugeordnet. Die Steuereinrichtung 14 wirkt auf die beiden Stellmotore 8, 11 des zugehörigen Laufwagens 7 und auch auf den Fahrmotor 3 des Portals 2 ein. Die die vertikale Fahrzeugkontur abtastende Abtasteinrichtung ist vorteilhaft eine vertikale Lichtschranke, deren Lichtstrahl 15 sich im Austrittsbereich vor der Schlitzdüse 13 befindet. Der Lichtstrahl 15 ist in einem Abstand a vor der Schlitzdüse 13 angeordnet, welcher Abstand einem vorbestimmten Abstand zwischen Schlitzdüse 13 und der jeweils zu trocknenden Fahrzeugoberfläche entspricht. Die Schlitzdüse 13 soll in diesem vorbestimmten Abstand a an dem jeweils zu trocknenden Bereich der Fahrzeugoberfläche vorbewegt werden. Hierbei soll die Richtung L der Schlitzdüse 13 bzw. des aus ihr austretenden Luftstromes im wesentlichen senkrecht zu dem jeweils zu trocknenden Bereich der Fahrzeugoberfläche gerichtet sein, was durch den zweiten Stellmotor 11 bewirkt wird, welcher den Luftzuführkanal 9 gegenüber der Laufkatze 7 um die vertikale Achse C schwenkt. Wie bereits weiter oben erwähnt wurde, kann die Richtung L der Schlitzdüse 13 auch etwas gegenüber dem jeweils zu trocknenden Bereich der Fahrzeugoberfläche geneigt sein, um das auf der Fahrzeugoberfläche haftende Wasser in Bewegungsrichtung der jeweiligen Schlitzdüse auf der Fahrzeugoberfläche voran zu schieben. Der Ausdruck "im wesentlichen senkrecht" soll also auch eine solche kleine Neigung der Richtung L gegenüber der Fahrzeugoberfläche umfassen.

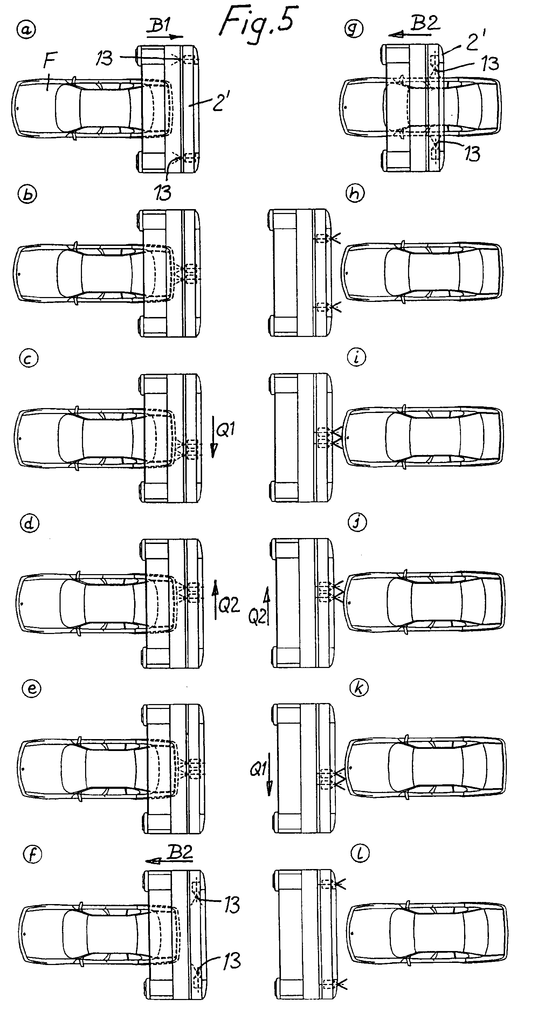

Das in den Figuren 3 und 4 dargestellte Ausführungsbeispiel unterscheidet sich von dem vorhergehend beschriebenen Ausführungsbeispiel lediglich dadurch, daß an dem Portal 2' ausschließlich Trocknungsaggregate angeordnet sind. Die Waschaggregate sind an einem nicht dargestellten, separaten Portal vorgesehen. Wie bei dem vorhergehend beschriebenen Ausführungsbeispiel, sind zwei Luftzuführkanäle 9 an der Traverse 2a des Portals 2' mittels Führungsschienen 6 und Laufwagen 7 in Richtung Q verfahrbar. Auch alle übrigen Teile die zur Bewegung und Steuerung der Luftzuführkanäle 9 und der an ihnen angeordneten Schlitzdüsen 13 dienen, entsprechen dem vorherbeschriebenen Ausführungsbeispiel, weshalb die vorstehende Beschreibung sinngemäß auch auf das in Fig. 3 und 4 dargestellte Ausführungsbeispiel zutrifft. Das gleiche gilt auch bezüglich der nachstehend beschriebenen Arbeitsweise der Trocknungsvorrichtung, die anhand der Fig. 5 nachstehend näher beschrieben wird.

Nachdem das ruhende Fahrzeug durch Hin- und Herbewegung des Portals mit den Bürsten 4, 5 gewaschen worden ist, wird bei einer Waschvorrichtung gemäß Fig. 3 und 4 das die Bürsten tragende Portal in eine Ruheposition bewegt und dort stillgesetzt. Zum Trocknen des Fahrzeuges wird dann nur noch das die Trocknungsaggregate tragende Portal 2' bewegt, wie es in Fig. 5 in den einzelnen Phasen dargestellt ist. Wenn die Waschaggregate und die Trocknungsaggregate an ein und demselben Portal gemäß Fig. 1 und 2 angeordnet sind, dann wird zum Trocknen dieses Portal 2 in der gleichen Weise, wie es in Fig. 5 dargestellt ist, bewegt, wobei jedoch die in dem Portal 2 ganz nach außen bewegten vertikalen Waschbürsten 4 und die vollständig nach oben bewegte horizontale Waschbürste 5 in ihren Ruhestellungen verbleiben.

Zu Beginn des Trocknungsvorganges kann sich das Portal 2' in der in Fig. 5a dargestellten Ausgangsposition befinden. Die vertikalen Luftzuführkanäle 9 befinden sich in ihren äußeren Ruhestellungen und sind so geschwenkt, daß ihre Austrittsdüsen 13 in Bewegungsrichtung B des Portals 2' zum Fahrzeugheck hin gerichtet sind. Im folgenden wird der Einfachheit halber nur jeweils auf die Bewegung und Richtung der jeweiligen Schlitzdüse 13 Bezug genommen, obwohl diese Bewegung durch Verfahren der Laufkatzen 7 und Schwenken der Luftzuführkanäle 9 sowie durch Verfahren bzw. Stillsetzen des Portals 2' bewirkt wird. Bei ruhendem Portal werden die Schlitzdüsen 13 aus ihrer Ausgangsstellung zunächst nach innen bewegt. Sollten sie sich in einem zu geringen Abstand vom Fahrzeugheck befinden, so bewirken die Abtasteinrichtung 15 und die Steuereinrichtung 14 ein Verfahren des Portals 2' in Richtung B1 bis sich die Schlitzdüsen 13 im vorbestimmten Abstand a vom Heck befinden. Diese Stellung ist in Fig. 5b gezeigt. Die zum Heck hin gerichteten Schlitzdüsen 13 werden nun gemäß Fig. 5c gemeinsam in Richtung Q1 zur linken Fahrzeugseite und anschließend gemäß Fig. 5d in Richtung Q2 zur rechten Fahrzeugseite bewegt. Anschließend können beide Schlitzdüsen 13 gemäß Fig. 5e nochmals zur Fahrzeuglängsmittelebene und dann nach außen bewegt werden, wo sie gemäß Fig. 5f in entgegengesetzten Richtungen jeweils um 90° geschwenkt werden, was mittels der Stellmotore 11 erfolgt. Die Auswärtsbewegung der Schlitzdüsen 13 erfolgt zweckmäßig nur so weit, daß sich die Lichtschranken der um 90° geschwenkten Schlitzdüsen noch immer etwas im Bereich des Fahrzeughecks befinden, damit bei der anschliessenden Bewegung des Portals 2' in Richtung B2 die Lichtstrahlen 15 durch die Fahrzeugkontur unterbrochen und die Schlitzdüsen 13 so weit nach außen verfahren werden, bis die Lichtstrahlen nicht mehr unterbrochen sind. Hierdurch befinden sich dann die zu den Fahrzeugseitenflächen hin gerichteten Schlitzdüsen im vorbestimmten Abstand a zu der Fahrzeugoberfläche. In diesem Zustand wird das Portal gemäß Fig. 5g in Richtung B2 mittels des Fahrmotors 3 über das Fahrzeug hinwegbewegt, wobei das an den Fahrzeugseitenflächen anhaftende Wasser abgeblasen wird. Wenn die Schlitzdüsen die Fahrzeugfront erreicht haben, wird gemäß Fig. 5h das Portal 2' wieder stillgesetzt und es werden dann die Schlitzdüsen 13 in entgegengesetzten Richtungen um 90° geschwenkt, so daß sie nunmehr zur Front des Fahrzeuges hin gerichtet sind. Gemäß Fig. 5i-k werden dann die Schlitzdüsen 13 in ähnlicher Weise, wie es vorhergehend bezüglich der Trocknung des Fahrzeughecks beschrieben wurde, mehrfach gemeinsam an der Fahrzeugfront entlang bewegt und schließlich gemäß Fig. 5l in ihren äußeren Ruhestellungen stillgesetzt. Durch die mehrmalige gemeinsame Hin- und Herwegung der beiden Schlitzdüsen 13 am Fahrzeugheck und an der Fahrzeugfront und ein besonders gutes Abblasen des dort anhaftenden Wassers wird erreicht, daß praktisch keine Wasserrückstände an der Fahrzeugfront und am Fahrzeugheck verbleiben und damit Kalkrückstände vermieden werden. Die Trocknung der nach oben gerichteten Flächen des Fahrzeuges erfolgt durch die nicht dargestellte horizontale Schlitzdüse, die während der Bewegung des Portals in Richtung B in Abhängigkeit von der Fahrzeugkontur höhengesteuert wird.

Die Abtasung der vertikalen Fahrzeugkontur kann nicht nur mittels Fotozellen, sondern auch durch Ultraschall oder sonstige geeignete Sensoren erfolgen. Da sich die Schlitzdüsen 13 während des Trocknens immer im idealen vorbestimmten Abstand zu dem jeweils zu trocknenden Bereich der Fahrzeugoberfläche befinden und da die Austrittsrichtung der Luftströmung auch immer im wesentlichen senkrecht zu dem jeweils zu trocknenden Bereich eingestellt wird, wird ein besonders gutes Trocknungsergebnis erreicht.

## Patentansprüche

1. Portalwasch- und Trocknungsvorrichtung für Fahrzeuge, mit mindestens einem gegenüber dem ruhenden Fahrzeug in dessen Längsrichtung mittels eines Fahrmotors verfahrbaren Portal (2, 2'), an dem unter anderem zwei sich im wesentlichen über die Fahrzeughöhe erstreckende, im wesentlichen vertikale Luftzuführkanäle (9) angeordnet sind, von denen jeder eine vertikale, zum Fahrzeug gerichtete Schlitzdüse (13) aufweist, **dadurch gekennzeichnet**, daß an einer horizontalen Traverse (2a) des Portals (2, 2') mindestens eine quer zu dessen Bewegungsrichtung verlaufende, horizontale Führungsschiene (6) angeordnet ist, daß an dieser für jeden Luftzuführkanal (9) eine mittels eines ersten Stellmotors (8) verfahrbare Laufkatze (7) vorgesehen ist, daß jeder Luftzuführkanal (9) gegenüber der Laufkatze (7) um eine vertikale Achse (10) mittels eines zweiten Stellmotors (11) schwenkbar ist und daß jedem Luftzuführkanal (9) eine die vertikale Fahrzeugkontur abtastende Steuereinrichtung (14, 15) zugeordnet ist, welche auf den Fahrmotor (3) und die Stellmotoren (8, 11) derart einwirkt, daß die vertikalen Schlitzdüsen (13) während der Portalbewegung in einen vorbestimmten Abstand (a) gegenüber der Fahrzeugoberfläche auch im Front- und Heckbereich entlang geführt werden und dabei die Luftzuführkanäle um die Vertikalachsen (10) geschwenkt und so eingestellt werden, daß ihre Schlitzdüsen (13) im wesentlichen senkrecht zu dem jeweils zu trocknenden Bereich der Fahrzeugoberfläche gerichtet sind.

2. Vorrichtung nach Anspruch 1, **dadurch gekennzeichnet**, daß die Führungsschiene (6) für die Laufkatzen (7) der Luftzuführkanäle (9) an der gleichen Traverse (2a) angeordnet ist, die auch Laufschienen für Waschbürsten (4) mit vertikaler Drehachse trägt.

3. Vorrichtung nach Anspruch 1 oder 2, **dadurch gekennzeichnet**, daß die Steuereinrichtung (14) je eine an jedem Luftzuführkanal (9) angeordnete vertikale Lichtschranke umfaßt, deren Lichtstrahl (15) sich im Luftaustrittsbereich vor der Schlitzdüse (13) mit dem vorbestimmten Abstand (a) von dieser erstreckt.

## Claims

1. Gantry washing and drying device for vehicles, with at least one gantry (2, 2') movable relative to the stationary vehicle in its longitudinal direction by means of a drive motor, and upon which there are located among others two substantially vertical air supply ducts (9) substantially extending over the height of the vehicle, of which each has a vertical slotted nozzle (13) aligned towards the vehicle, characterised in that there is disposed on a horizontal crosspiece (2a) of the gantry (2, 2') at least one horizontal guide rail (6) extending transversely to its direction of movement, in that there is provided on the latter for each air supply duct (9) a traveller (7) movable by means of a first servo motor (8), in that each air supply duct (9) is pivotal relative to the traveller (7) about a vertical axis (10) by means of a second servo motor (11), and in that there is associated with each air supply duct (9) a control device (14, 15) scanning the vertical vehicle contour, said control device acting on the drive motor (3) and on the servo motors (8, 11) in such a way that the vertical slotted nozzles (13) during the gantry movement are passed along the vehicle surface, also in the front and rear areas at a predetermined spacing (a) and the air supply ducts are pivoted about the vertical axis (10) and are so adjusted that their slotted nozzles (13) are aligned substantially vertically to the respective area of the vehicle surface to be dried.

2. D Device according to claim 1, characterised in that the guide rail (6) for the travellers (7) of the air supply ducts (9) is located on the same crosspiece (2a), which also carries runner rails for wash brushes (4) with a vertical axis of rotation.

3. Device according to claim 1 or 2, characterised in that the control device (14) comprises a vertical light barrier disposed respectively on each air supply duct (9), whose light beam (15) extends in the air outlet area in front of the slotted nozzle (13) with the predetermined spacing (a) therefrom.

## Revendications

1. Dispositif de lavage et de séchage à portique pour véhicules, comprenant au moins un portique (2, 2') pouvant être déplacé par rapport au véhicule immobile dans la direction longitudinale de ce dernier au moyen d'un moteur de translation, portique sur lequel sont disposés, entre autres, deux canaux (9) d'apport d'air essentiellement verticaux s'etendant essentiellement au-dessus de la hauteur du véhicule, qui présentent chacun une buse à fente (13) verticale, dirigée vers le véhicule, **caractérisé** en ce qu'au moins une glissière horizontale (6), s'étendant transversalement à la direction de déplacement du portique, est disposée sur une traverse horizontale (2a) du portique (2, 2'), en ce qu'est prévu sur cette glissière, pour chaque canal (9) d'apport d'air, un chariot roulant (7) pouvant être déplacé au moyen d'un premier servomoteur (8), en ce que chaque canal (9) d'apport d'air peut pivoter par rapport au chariot roulant (7) autour d'un axe vertical (10) au moyen d'un deuxième servomoteur (11), et en ce qu'un dispositif de commande (14, 15) détectant le contour vertical du véhicule est associé à chaque canal (9) d'apport d'air, dispositif qui agit sur le moteur de translation (3) et les servomoteurs (8, 11) de telle sorte que les buses à fentes (13) verticales sont, pendant le déplacement du portique, guidées à une distance prédéfinie (a) le long de la surface du véhicule également dans la région avant et arrière de ce dernier, et se faisant les canaux d'apport d'air sont pivotés autour des axes verticaux (10) et réglés de telle sorte que leurs buses à fentes (13) sont orientées essentiellement perpendiculaire à la région à sécher respective de la surface du véhicule.

2. Dispositif selon la revendication 1, **caractérisé** en ce que la glissière (6) pour les chariots roulants (7) des canaux (9) d'apport d'air est disposée sur la même traverse (2a) qui porte également des rails de roulement pour des brosses de lavage (4) à axe de rotation vertical.

3. Dispositif selon la revendication 1 ou 2, **caractérisé** en ce que le dispositif de commande (14) comprend un barrage photoélectrique vertical respectif, disposé sur chaque canal (9) d'apport d'air, dont le rayon lumineux (15) s'étend dans la région de sortie d'air devant la buse à fente (13), à la distance prédéfinie (a) de cette dernière.
